# EUROPEAN PATENT APPLICATION

(11) **EP 1 004 871 A2**
(43) Date of publication of application: **31.05.2000**
(21) Application number: 99309431.7
(22) Date of filing: 25.11.1999
(51) Int. Cl.: G01N 1/40

(54) **Sample analysing method and apparatus**

(30) Priority: 26.11.1998 GB 9825806
(71) Applicant: Markes International Limited, Pontyclun, Mid Glamorgan CF72 8YW (GB)
(72) Inventor: Cole, Alun, Bridgend, CF35 6EL (GB); Reichl, Markus, D 83098, Brannenburg (DE)
(74) Representative: Gibson, Stewart Harry

(57) **Abstract**

An analytical method in which a first flow of inert gas is passed through a sample tube (ST) and a trap (TT) in succession whilst the sample tube (ST) is heated and the trap (TT) is cooled. The sample tube (ST) contains a sorbent material (10) on which one or more volatile substances have been adsorbed or absorbed and the trap (TT) contains a smaller quantity of material which serves to adsorb or absorb the volatile substance(s) liberated from the sample tube (ST). A second flow of gas is subsequently passed through the trap (TT) and a sensor device (D) in succession whilst heating the trap (TT). The method thus improves the analytical signal provided by the sensor device (D) by concentrating the volatile substance(s) in the second flow of gas.

## Description

The present invention relates to a method and apparatus for analysing samples which have been taken of substances present in a vapour.

It is known to use sample tubes, containing adsorbent or absorbent material, to sample for the presence or concentration of volatile substances in a vapour. Such sample tubes may be used to sample for pollutants in the air e.g. at a person's workstation, or to sample vapours given off by food products or by natural or synthetic materials (e.g. plastics materials). The sorbent material in the sample tube adsorbs or absorbs volatile substances from the air or other vapour in which the sample tube is placed for a predetermined period of time: the sample tube is then taken to a laboratory for analysis. The analytical apparatus which is used is arranged to liberate the adsorbed or absorbed substances by rapidly heating the sample tube to a high temperature whilst a flow of inert gas is passed through the tube: the flow of inert gas carries the liberated substances to an analysing device.

The analysing device may comprise a chemical sensor device, having a cell of relatively small volume in which one or more chemical sensors are positioned. In particular, the device may comprise an array of sensors, the sensors of which have different response characteristics to each of a range of vapours: the pattern or combination of output signals derived from the set of sensors is characteristic of the vapour (or substance carried in an inert gas) to which the sensors are all simultaneously exposed.

Such sensor devices have the advantage that they can provide information about a sample in a much shorter period of time than other equipment, e.g. gas chromatographs. However, the application of chemical sensor devices is limited by relatively poor signal-to-noise ratios. The signal can be increased relative to the noise by extending the duration of time over which the sensor is exposed to the sample being sensed, so allowing more measurements to be made. This could be achieved by sampling a volume substantially greater than the cell volume of the sensor device, so that the signal is maintained for an extended period: however, this has the disadvantage that only a small proportion of the total mass of the sample substance is present in the sensor cell at any one time and, since the amplitude of the sensor response signal is related to the mass of the detected substance, then while the duration of exposure is increased the signal amplitude is reduced and hence the signal-to-noise ratio compromised: further, if the sample includes a mixture of different substances, these will be liberated at different times and the output signal, although maintained for an extended period, would vary substantially over that period.

We have now devised a method and apparatus in which this problem is overcome by reducing the volume of the gas which carries the sample such that it more closely matches the cell volume of the sensor device.

Thus, in accordance with the present invention there is provided an analytical method which comprises passing a first flow of inert gas through a sample tube and a trap in succession whilst said sample tube is heated and said trap is cooled, the sample tube containing sorbent material on which one or more volatile substances have been adsorbed or absorbed and said trap containing a smaller quantity of material serving to adsorb or absorb the volatile substance(s) liberated from the sample tube, and subsequently passing a second flow of inert gas through said trap and a sensor device in succession whilst heating said trap.

In use of this method, firstly the sample tube is heated to liberate the volatile substance(s) previously adsorbed or absorbed on its sorbent material (typically of 200mg): the volatile substances are carried by the flow of inert gas to the trap, the sorbent material (typically 20mg) of which adsorbs or absorbs the volatile substances carried by the inert gas. Typically the sample tube will have been used at ambient temperature to sample a vapour and adsorb or absorb the volatile substances in that vapour: because the trap device is now cooled to below ambient temperature (e.g. to-10°C), its smaller quantity of sorbent material is able to take up all of the volatile substances liberated from the sample tube. The trap (typically in the form of a tube similar to but of smaller size than the sample tube) would not be useful as the sample tube itself, because at ambient temperature its small quantity of sorbent material is only capable of retaining substances from a limited volume of gas before "break through", i.e. the volatile substances start to diffuse out through the opposite end of the tube from the entry end: for example, 20mg of sorbent material is only able to take up substances from a maximum of 1 litre of gas before break through; the small amount of volatile substance which can be taken up from the ambient by such a small tube limits the signal obtainable from the sensor device during analysis. The larger sample tube, with typically 200mg of sorbent material, is therefore required to take the sample at ambient temperature: however, the method of the present invention then effectively transfers this sample to the smaller trap: because of the much lower temperature, the affinity of its sorbent material is much increased; typically, 20mg of sorbent material at -10°C is able to retain the volatile substance from up to 10 litres of gas without break through.

In the next step of the method, the trap is heated to liberate the volatile substances which have been transferred to it from the sample tube, and the flow of insert gas carries these liberated substances to the sensor device. Because of its relatively small size, the trap can be heated more rapidly than the sample tube, such that the volatile substances are liberated into a relatively small volume of gas: typically, 20mg of sorbent material can be heated at a rate of 60°C/sec to liberate substances ranging in volatility from n-C5 to n-C40 into a volume of approximately 1.0 to 1.5ml of gas. Thus, the liberated substances are concentrated into a small volume of the gas flow, which volume is typically of the same order of magnitude as the cell volume of the sensor device.

In some cases, it may be desirable to transfer the sample from the sample tube to a first trap, then from that trap to a smaller trap, and possibly from the second trap to a further trap and so on, before in a final stage the sample is passed to the sensor device. In this way, the sample is successively concentrated into progressively smaller volumes of sorbent material, until the volume of gas into which the sample substances can be liberated matches the cell volume of the sensor device.

Also in accordance with the present invention, there is provided an analytical apparatus which comprises means for heating a sample tube which contains sorbent material, a trap which contains a smaller quantity of sorbent material, means for establishing a first flow of inert gas through said sample tube and trap in succession, means for establishing a second flow of inert gas through said trap and through a sensor device in succession, and means for cooling said trap whilst said first flow of inert gas is established and for heating said trap whilst said second flow of inert gas is established.

The apparatus may be arranged to perform a two-stage or multiple-stage transfer, successively concentrating the sample onto progressively smaller traps.

Where the sample substances are concentrated in a small volume of gas passing through the sensor device, the sensor output signal describes a relatively sharp peak, the duration of which is short. For example, a sample volume of lml carried in a gas flow of 2ml/min will pass through the sensor device in 30 seconds. There are accordingly problems of inadequate signal-to-noise ratio.

We have now devised a method and apparatus which overcome these particular problems.

Thus, in accordance with the present invention there is provided an analytical method which comprises passing a flow of inert gas through a body of sorbent material and through a sensor device in succession, heating the sorbent material to liberate, into a volume of flowing gas, any volatile substance or substances previously taken up by said sorbent material, and stopping said flow of inert gas at a predetermined instant after commencing heating the sorbent material, corresponding to the presence of said volume of gas in said sensor device.

In use of this method, the flow of gas is stopped when the liberated sample substances are present within the sensor device: this extends the time for which the sensor device is exposed to the sample substances and so extends the duration of the corresponding output signal or signals of the sensor device; the signals of interest are accordingly easier to distinguish from noise.

The instant at which the gas flow is stopped may be determined from a knowledge of the rate of flow of the gas and the volume of the flow path to the sensor device. Alternatively, means may be provided for responding to a change in the sensor output signal, indicating detection of the sample substance within the sensor cell, to stop the gas flow: such an arrangement automatically compensates for changes in flow or other factors affecting the delay between commencement of heating and arrival of the sample substances within the sensor device.

Whilst the gas flow is stopped, the diffusion of the sample out of the sensor device may be sufficiently restricted simply by providing the sensor device with an outlet passage which has a width relatively small compared with its length.

After a period sufficient for recording the amplitude of the output signal(s) of the sensor device, the gas flow is restarted in order to flush the sample volume out of the sensor device. The sample flushed out of the sensor device may be collected (e.g. adsorbed or absorbed in a further sample tube) for subsequent analysis.

Also in accordance with the present invention, there is provided an analytical apparatus which comprises means for heating a device which contains sorbent material in order to liberate any volatile substance or substances previously taken up thereby, a sensor device, and means for establishing a flow of inert gas through said sorbent material and said sensor device in succession, the apparatus being arranged to terminate said flow of inert gas a predetermined time after commencement of heating said material.

Embodiments of the present invention will now be described by way of example only and with reference to the accompanying drawings, in which:
FIGURE 1 is a schematic diagram of a first embodiment of analytical apparatus in accordance with the present invention;
FIGURE 2 is a schematic diagram of a trap arrangement of a second embodiment of apparatus in accordance with the present invention;
FIGURE 3 shows a series of output signals obtained from the sensor array device of the apparatus of Figure 1; and
FIGURE 4 shows a corresponding series of output signals obtained from the sensor array device under "stop flow" conditions.

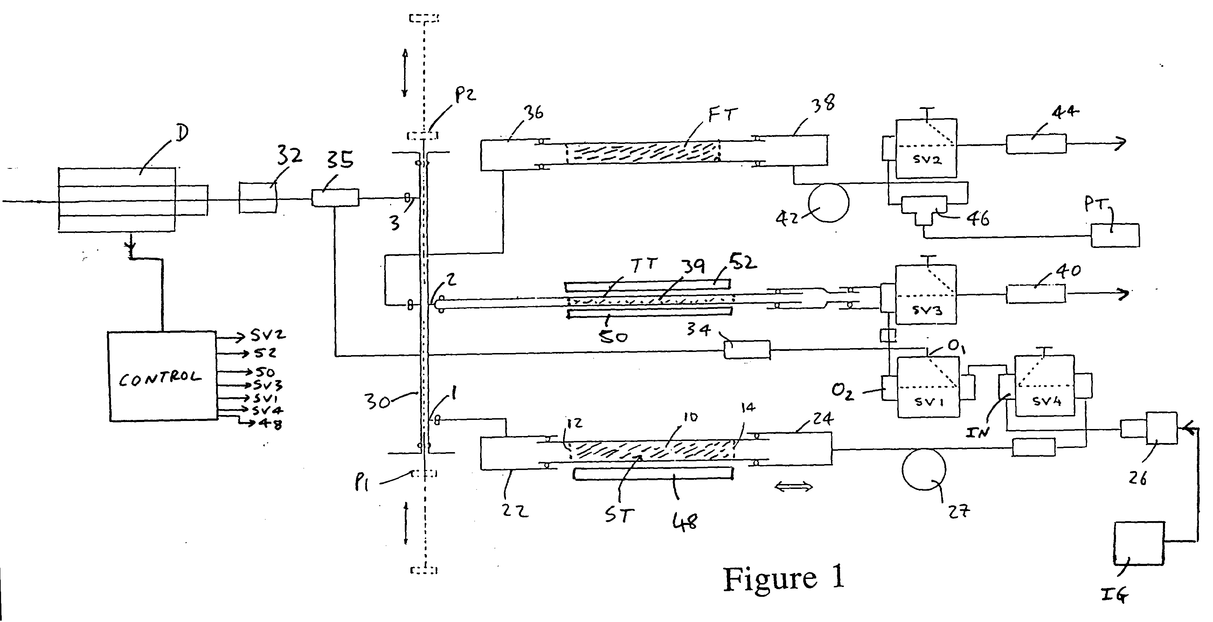

Referring to Figure 1 of the drawings, there is shown an analytical apparatus which comprises a chemical sensor array device D for analysing substances released from a sample tube ST by thermal desorption. Thus, the sample tube ST is filled with granular sorbent material 10, held in place by gas-permeable partitions 12,14 inset from the respective ends of the sample tube: the sample tube ST has been used to take a sample at ambient temperature, its sorbent material 10 adsorbing or absorbing any volatile substances at the sampling location. The analytical apparatus comprises two couplings 22,24 for receiving the opposite ends of the sample tube ST: coupling 22 is fixed and the other coupling 24 is retractable to allow the sample tube ST to be inserted for desorption, and subsequently removed.

A source IG of inert gas is connected to an input coupling 26 which is connected via a solenoid valve SV4 and a flexible link 27 to the retractable coupling 24: the flexible link 27 allows the line leading to the coupling 24 to accommodate the retraction of this coupling. The opposite coupling 22 for the sample tube ST is connected to an inlet port 1 of a control valve 30: this control valve comprises a tubular body formed with a number of ports 1 to 3 at different positions along its length, and plungers P1, P2 slidably inserted into the opposite ends of the tubular valve body; the plungers P1, P2 are linked together so that as one plunger is advanced into the valve body, the other plunger is retracted.

The inlet port 1 from the sample tube ST is positioned adjacent one end of the valve body 30: an outlet port 3 adjacent the opposite end of the valve body is connected via a condenser device 32 (a so-called "cold finger" device) to the sensor array device D. The inlet IN of the solenoid valve SV4 is connected via a solenoid valve SV1 (and a first outlet O, thereof) and a flow reducing coupling 34 to a tee coupling 35 on the line between the control valve 30 and the condenser device 32.

A second outlet port 2 of the control valve body 30, positioned intermediate the inlet port 1 and its first outlet port 3, is connected to one end of a trap tube TT. Optionally, and as shown in Figure 1, the same outlet port 2 is connected to a flow path in which a secondary sample tube FT may be connected, via couplings 36,38. The trap tube TT contains granular sorbent material 39, but is substantially smaller in size and contains a substantially smaller quantity of sorbent material than the sample tube ST (typically 20mg as compared with 200mg). The opposite end of the trap tube TT is connected via a solenoid valve SV3 and a needle valve 40 (acting as an adjustable restrictor) to a vent. A second outlet O₂ of the solenoid valve SV1 is also connected to the inlet of solenoid valve SV3. The secondary sample tube FT is of the same construction and size as the sample tube ST. The coupling 38 is arranged for engaging the opposite end of the secondary tube FT from the coupling 36: coupling 38 is connected via a flexible link 42 (which accommodates retraction of the coupling 38 for insertion/removal of the filter tube) to a solenoid valve SV2, the outlet of which is connected via a needle valve 44 to a vent. A pressure transducer PT is connected to a tee coupling 46 in the inlet line to the solenoid valve SV4.

The apparatus further comprises a control means CONTROL for controlling the valves SV1 to SV4, the plungers P1,P2 of the valve body 30, and heating means 48 and 52 and cooling means 50 which are associated with the sample tube ST and trap tube TT: the control means also responds to one or more output signals from the sensor array device D.

In standby mode, inert gas from the source IG flows through the solenoid valve SV1, the flow restrictor 34, tee coupling 35, the condenser 32 and the sensor array device D, in order to purge the sensor array device D. The condenser 32 serves to remove water or other substances which would otherwise condense within the sensor array device D. At this time, the solenoid valve SV4 is closed to prevent the flow of gas to the coupling 24 for the sample tube ST: also the control valve plunger P1 is inserted into the valve body 30 to close the path from the sample tube end coupling 22; any previous sample tube can be removed and a new sample tube ST inserted. Because plunger P1 is inserted, plunger P2 is retracted and part of the gas flow entering tee coupling 35 is able to pass through the control valve 30 and through both the trap tube TT and the secondary sample tube FT: solenoid valves SV2 and SV3 are however closed, such that the trap tube TT and secondary sample tube FT merely fill with inert gas. Next solenoid valve SV4 is opened and plunger P1 retracted (and plunger P2 inserted), for gas to flow into the sample tube ST: the system is then monitored for leaks over a predetermined period of time, a leak being indicated by any reduction in the pressure sensed by the pressure transducer PT.

Providing no leak is detected, then the sample tube ST is purged by opening the solenoid valves SV2 and SV3 to allow the flow of inert gas through the sample tube ST, the control valve 30 and the trap tube TT and secondary sample tube FT.

The substances previously taken up by the sample tube ST are now transferred to the trap tube TT. For this purpose, the sample tube ST is heated by heating means 48 to liberate the adsorbed or absorbed volatile substances, to be carried by the flow of inert gas to the trap tube TT: the latter tube is cooled e.g. to -10°C by cooling means 50 in order to maximise its ability to take up the volatile substances from the gas flowing through it. During this process, the solenoid valve SV2 may be closed to prevent the flow of gas through, and transfer of volatile substances to, the secondary tube FT: if desired, however, the solenoid valve SV2 may be open so that a proportion of the inert gas flow passes through the secondary tube FT and a corresponding proportion of the volatile substances, liberated from the sample tube ST, are transferred to the secondary tube FT.

Finally, a flow of inert gas is established through the solenoid valve SV1, the trap tube TT, the control valve 30 and the sensor array device D: the trap tube TT is heated by heating means 52 to liberate the volatile substances which have just been transferred to it, for the flow of inert gas to carry these substances to the sensor array device D. In order to establish this flow of gas, solenoid valve SV4 is closed, solenoid valve SV1 is changed over for the incoming gas to issue from its second outlet, and plunger P1 of the control valve is inserted (plunger P2 being correspondingly retracted).

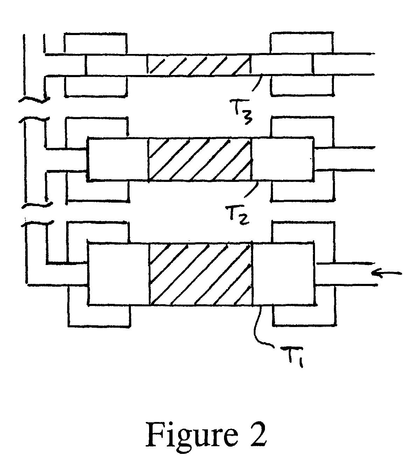

In another embodiment of the present invention, a series of traps T1 to T3 of decreasing volume are provided, as shown diagrammatically in Figure 2, through which a sample may be passed in succession to progressively concentrate the sample within the flow of gas.

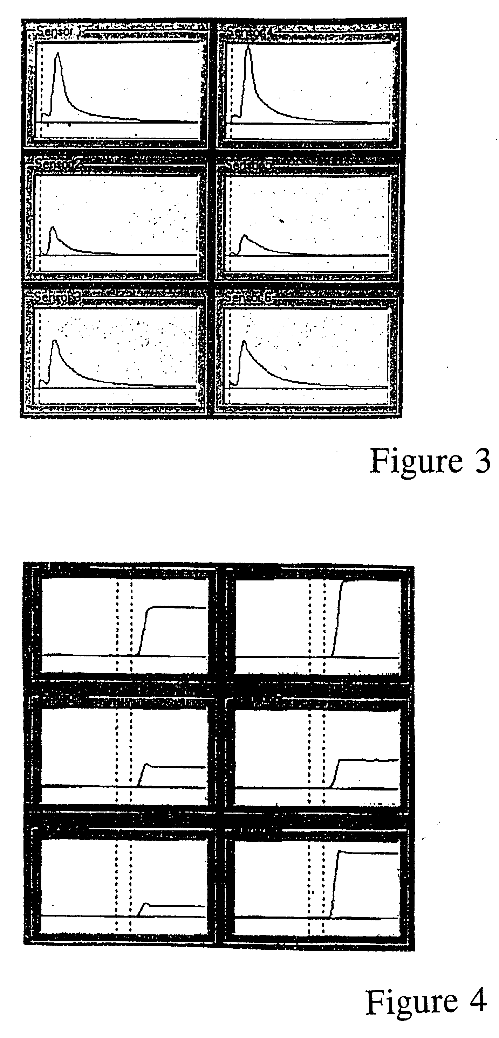

Referring to Figure 1, the sensor array device D comprises a cell of small volume, through which the flow of gas passes. The device comprises a substrate, positioned within the cell, which is formed with an array of e.g. six sensors, which have different sensitivities to specific substances. For example, the device may comprise a microbalance device, in which the sensors comprise quartz crystals connected in respective resonant circuits: the quartz crystals are coated with different materials, which adsorb or absorb volatile substances to which they are exposed, so altering the weight of the respective coatings and so altering the oscillating frequency of the respective resonant circuits in which they are connected. Figure 3 shows a typical set of output signals derived from the sensors of such a device, in use of the apparatus of Figure 1: these output signals represent the change, over time, in the operating frequency of the respective resonant circuits.

As previously explained, preferably the flow of gas through the trap tube TT is stopped at a predetermined instant corresponding to the arrival, into the sensor cell of device D, of the substances liberated from the trap tube TT. These substances therefore remain within the sensor cell for a prolonged period of time, such that the output signals from the respective sensors persist for a correspondingly prolonged period, as shown in Figure 4.

After a period of time, sufficient for the output signals of the sensor device to be recorded, the flow of inert gas resumed in order to flush the sample out of the sensor device. The system is then returned to the standby mode, during which the sample tube ST can be removed and replaced by a fresh sample tube: also, the secondary sample tube FT can be removed for further analysis, and replaced by a tube which is free of adsorbed or absorbed substances.

## Claims

1. An analytical method which comprises passing a first flow of inert gas through a sample tube (ST) and a trap (TT) in succession whilst said sample tube (ST) is heated and said trap (TT) is cooled, said sample tube containing sorbent material (10) on which one or more volatile substances have been adsorbed or absorbed and said trap (TT) containing a smaller quantity of material serving to adsorb or absorb said volatile substance(s) liberated from said sample tube (ST), and subsequently passing a second flow of inert gas through said trap (TT) and a sensor device (D) in succession whilst heating said trap (TT).

2. A method as claimed in Claim 1, wherein said trap (TT) is cooled to a temperature below that at which said one or more volatile substances were adsorbed or absorbed.

3. A method as claimed in Claim 1 or Claim 2, wherein said trap (TT) has a volume less than that of said sample tube (ST).

4. A method as claimed in any preceding claim, wherein said trap (TT) has a volume substantially the same as that of said sensor device (D).

5. A method as claimed in any preceding claim, wherein said trap (TT) comprises one of a succession of traps of progressively decreasing volume.

6. An analytical apparatus which comprises means for heating a sample tube (ST) which contains sorbent material (10), a trap (TT) which contains a smaller quantity of sorbent material, means (SV4) for establishing a first flow of inert gas through said sample tube (ST) and trap (TT) in succession, means (SV1,SV3,SV4) for establishing a second flow of inert gas through said trap (TT) and through a sensor device (D) in succession, and means for cooling said trap (TT) whilst said first flow of inert gas is established and for heating said trap whilst said second flow of inert gas is established.

7. An analytical method which comprises passing a flow of inert gas through a body of sorbent material and through a sensor device (D) in succession, heating said sorbent material to liberate, into a volume of flowing gas, any volatile substance or substances previously taken up by said sorbent material, and stopping said flow of inert gas at a predetermined instant after commencing heating said sorbent material, corresponding to the presence of said volume of gas in said sensor device (D).

8. A method as claimed in Claim 7, wherein said predetermined instant at which said flow of gas is stopped is determined from a knowledge of the rate of flow of said gas and the volume of the flow path to said sensor device (D).

9. A method as claimed in Claim 7, wherein means are provided for responding to a change in output of said sensor device, indicating detection of a volatile substance within said sensor device (D), to stop said flow of gas.

10. A method as claimed in any of Claims 7 to 9, wherein said sensor device (D) is provided with an outlet passage which has a width relatively small compared with its length, to restrict diffusion out of said sensor device (D) whilst said flow of gas is stopped.

11. A method as claimed in any of Claims 7 to 10, wherein said flow of gas is restarted after having been stopped for a period of time, to flush any residual volatile substances from said sensor device (D).

12. A method as claimed in Claim 11, wherein said volatile substances flushed from said sensor device (D) are collected for subsequent analysis.

13. An analytical apparatus which comprises means for heating a device (TT) which contains sorbent material in order to liberate any volatile substance or substances previously taken up thereby, a sensor device (D), and means (SV1,SV3,SV4) for establishing a flow of inert gas through said sorbent material and said sensor device (D) in succession, the apparatus being arranged to terminate said flow of inert gas a predetermined time after commencement of heating said material.
